# EUROPÄISCHE PATENTSCHRIFT

(11) **EP 1 349 694 B1**
(45) Veröffentlichungstag und Bekanntmachung des Hinweises auf die Patenterteilung: **29.06.2005**
(21) Anmeldenummer: 01989414.6
(22) Anmeldetag: 14.12.2001
(51) Int. Cl.: B23K 9/32, B23K 37/00

(54) **VERFAHREN UND VORRICHTUNG ZUM REINIGEN VON SCHWEISSBRENNERN**
METHOD AND DEVICE FOR CLEANING WELDING TORCHES
PROCEDE ET DISPOSITIF PERMETTANT DE NETTOYER DES CHALUMEAUX DE SOUDAGE

(30) Priorität: 20.12.2000 DE 10063572
(43) Veröffentlichungstag der Anmeldung: 08.10.2003
(73) Patentinhaber: von der Ohe, Jürgen, 06120 Halle (DE)
(72) Erfinder: von der Ohe, Jürgen, 06120 Halle (DE)
(74) Vertreter: Voigt, Wolf-Rüdiger
(86) Internationale Anmeldenummer: PCT/DE2001/004730
(87) Internationale Veröffentlichungsnummer: WO 2002/049794

(56) Entgegenhaltungen:
- PATENT ABSTRACTS OF JAPAN vol. 1996, no. 04, 30. April 1996 (1996-04-30) & JP 07 314142 A (CHIYODA KOGYO KK), 5. Dezember 1995 (1995-12-05)
- PATENT ABSTRACTS OF JAPAN vol. 015, no. 310 (M-1144), 8. August 1991 (1991-08-08) & JP 03 114676 A (KOMATSU LTD), 15. Mai 1991 (1991-05-15)
- PATENT ABSTRACTS OF JAPAN vol. 008, no. 253 (M-339), 20. November 1984 (1984-11-20) & JP 59 127978 A (TOYOTA JIDOSHA KK), 23. Juli 1984 (1984-07-23)

## Beschreibung

Die Erfindung betrifft ein Verfahren und eine Vorrichtung zum Reinigen von Schweißbrennern in automatisierten Schweißstraßen, an Schweißrobotern und bei der Einzelfertigung.

Es sind verschiedene Verfahren zum Reinigen von Schweißbrennern bekannt. Viele Verfahren beruhen auf der mechanischen Reinigung. Es werden eine oder mehrere Drahtbürsten, unterschiedliche Fräswerkzeuge oder Formfräser eingesetzt.

Nachteilig hierbei ist, daß nur der äußere Bereich und ein Teil des Innenbereiches mit diesen Werkzeugen gereinigt werden kann. Die Rauchgasablagerungen im Inneren des Brenners und die eingeblasenen Trennmittel werden nicht vollständig entfernt.

Als ein weiterer Nachteil hat sich die kreisförmige Ausbildung des Brenners durch die notwendige Drehbewegung der Werkzeuge erwiesen, da sie einer Anpassung der Brennerform an den Naht- oder Punktbereich entgegen stehen. Änderungen in der Form des Brenners erfordern eine Veränderung der Reinigungsvorrichtung.

Ein weiterer Nachteil besteht darin, daß die anfänglich glatte, meist vernickelte Oberfläche des Brenners durch die mechanische Bearbeitung abgetragen und aufgerauht wird. Dies führt zu einer schnelleren und stärkeren Verunreinigung des Brenners. Aus JP-07314142 sind ein Verfahren und eine Vorrichtung zur Reinigung mittels Druckluft bekannt. Dieses Dokument bildet die Basis für den Oberbegriff des Anspruchs 1.

Der im Patentanspruch 1 bis 4 angegebenen Erfindung liegt das Problem zugrunde, ein Reinigungsverfahren und eine Vorrichtung zum gleichmäßigen Reinigen von Schweißbrennern zu schaffen.

Dieses Problem wird durch ein Verfahren gemäß Anspruch 1 gelöst.

Gemäß Anspruch 5 und 6 besteht die Vorrichtung zur Durchführung des Verfahrens aus einer oder mehreren drehbaren Strahldüsen, die unter einem bestimmten, veränderlichen Winkel einen definierten Abschnitt des Schweißbrenners reinigen und deren Austrittsöffnung der Geometrie des Schweißbrenners angepaßt werden kann.

Zum Reinigen von Oberflächen wird der zum Transport des Strahlmittels und zum Erreichen der erforderlichen kinetischen Energie benötigte Luftstrom in gleichen oder unterschiedlichen Verhältnissen, entsprechend der Anzahl der verwendeten Strahldüsen und der geometrischen Abmessungen der zu reinigenden Abschnitte, geteilt. Die Teilung erfolgt je nach Teilungsverhältnis durch Änderung des Leitungsquerschnittes oder durch Kombination von mehreren regelbaren Ventilen.

Durch die Drehbewegung der Strahldüse und / oder das außermittige Anblasen des Schweißbrenners wird eine intensive Reinigung der gewünschten Abschnitte erreicht. Bei gleichzeitiger Anpassung der Düsenaustrittsöffnung an den Nahtbereich wird der Reinigungseffekt erhöht.

Eine Weiterbildung der Erfindung besteht in einem Pulsieren des kalten Strahlmittelgemisches. Das Pulsieren kann bei mehreren Strahldüsen gleichmäßig oder wechselseitig erfolgen.

Der Vorteil der Erfindung besteht darin, daß durch den Einsatz der Kaltstrahltechnik, insbesondere durch die Verwendung eines CO₂-Pellets /Luftgemisches, die Reinigung der Brenner unabhängig von ihrer Größe und

Form erfolgen kann. Durch die CO₂-Pellets oder CO₂-Schnee erfolgt das begrenzte Abkühlen und Verspröden sowie Ablösen der Verunreinigungen, während der Luftstrom die gelösten Verunreinigungen aus dem Schweißbrenner bzw. vom Schweißbrenner entfernt.

Ein weiterer Vorteil der Erfindung ist, daß durch den Einsatz der Kaltstrahltechnik kein direkter Kontakt zum Schweißbrenner besteht und damit die Oberfläche des Schweißbrenners nicht beschädigt oder abgetragen wird.

Ferner ist für die Erfindung von Vorteil, daß mehrere Schweißbrenner mit unterschiedlichen Formen und Größen in einer Reinigungsstation gereinigt werden können.

Die Erfindung soll nachstehend an zwei Beispielen näher erläutert werden.
Es zeigen:

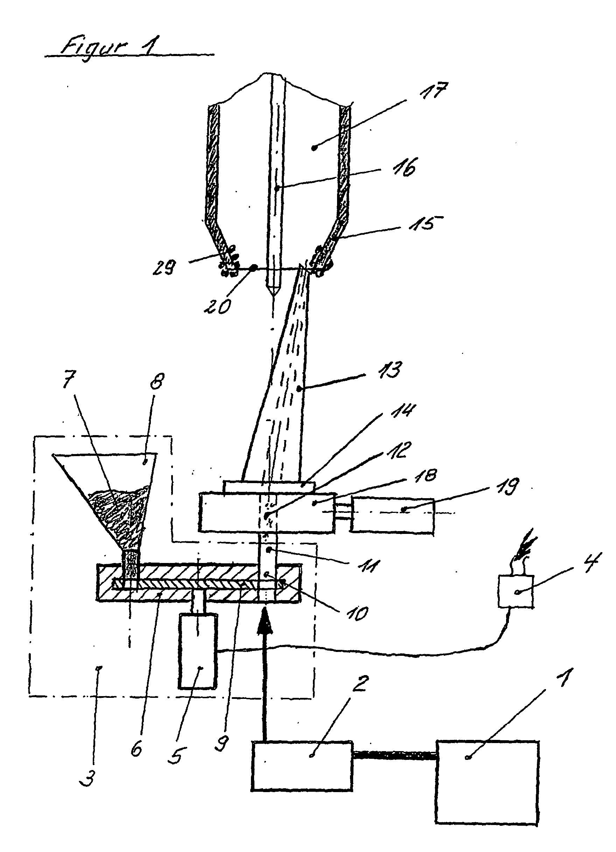

- Figur 1:: Aufbau einer Reinigungsvorrichtung

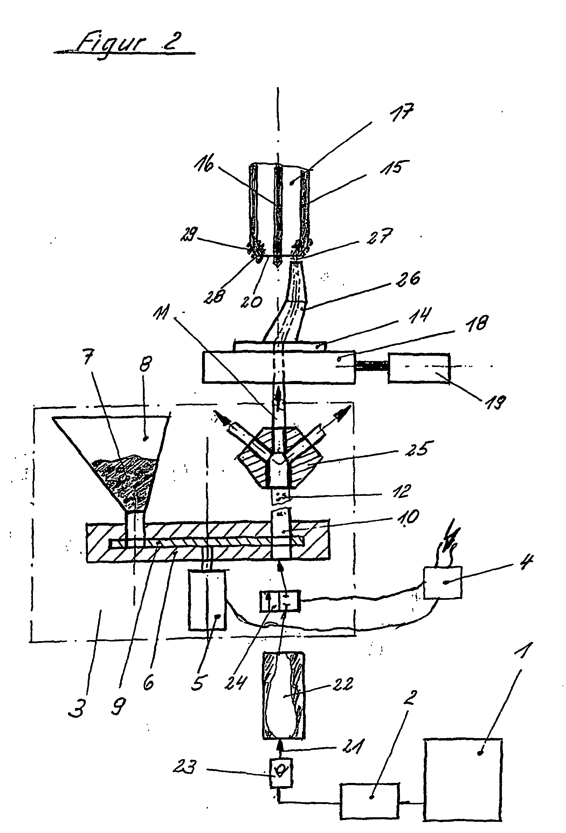

- Figur 2:: Aufbau einer Reinigungsstation für mehrere Schweißbrenner mit pulsierender Reinigung

### Beispiel 1

Die vom nicht näher dargestellten Kompressor 1 kommende Druckluft wird in der Aufbereitungsstation 2 getrocknet und angewärmt und zur Strahlanlage 3 geführt. Ein Kontaktgeber 4 ist mit dem Arbeitsprogramm der Schweißanlage verbunden. Der Kontaktgeber 4 schaltet ca. 2 Sekunden vor Ablauf des Schweißprogramms den Antriebsmotor 5 der Dosiereinheit 6 ein. Die CO₂-Pellets 7 gelangen vom Vorratsbehälter 8 in die Dosierscheibe 9 und durch die Drehung der Dosierscheibe 9 zur Ausblasstation 10. In der Ausblasstation 10 werden die CO₂-Pellets 7 der durch die Leitung 11 zugeführten Druckluft beigemischt. Der mit den CO₂-Pellets angereicherte Druckluftstrom 12 wird der Strahldüse 13 zugeführt. Die Strahldüse 13 sitzt auf einem Adapter 14 und wird durch die spezielle konstruktive Gestaltung des Adapters 14 so aus der Senkrechten ausgelenkt, daß sie den Druckluftstrom 12 einseitig auf den Bereich zwischen der Schutzgasdüse 15 und der Elektrode 16 des Schweißbrenners 17 lenkt. Das Rotationsgetriebe 18 wird durch den Motor 19 angetrieben und ermöglicht eine Drehbewegung der Strahldüse 13 über den gesamten Ringbereich 20 zwischen der Schutzgasdüse 15 und der Elektrode 16. Die CO₂-Pellets im Druckluftstrom 12 bewirken ein Abkühlen der abgesetzten Verunreinigungen 29 und ein Abplatzen der Verunreinigungen 29 von der Schutzgasdüse 15 durch die auftretende Thermospannung zwischen den Verunreinigungen 29 und der Schutzgasdüse 15.

### Beispiel 2

Die vom Kompressor 1 kommende Druckluft wird in der Aufbereitungsstation 2 getrocknet und angewärmt und durch die Leitung 21 zum Volumenspeicher 22 geführt. Vor dem Volumenspeicher 22 ist das Rückschlagventil 23 angeordnet. Hinter dem Volumenspeicher 22 befindet sich das Ventil 24, das vom Kontaktgeber 4 gesteuert wird. Der Antriebsmotor 5 wird vom Kontaktgeber 4 angesteuert und versetzt die Dosierscheibe 9 der Dosierstation 6 in eine Drehbewegung. Nach einem vorgegebenen Zeitintervall wird das Ventil 24 geöffnet. Die ausströmende Druckluft wird in der Ausblasstation 10 mit den CO₂-Pellets 7 beladen. Der mit CO₂-Pellets angereicherte Druckluftstrom 12 wird einem Verteiler 25 zugeführt. In dem Verteiler 25 wird der Druckluftstrom 12 entsprechend der Anzahl der eingesetzten Winkel-Strahldüsen 26 geteilt.

Die Winkel-Strahldüsen 26 sind auf dem Adapter 14 montiert und werden durch das Rotationsgetriebe 18 und den Motor 19 in Drehbewegung versetzt. Der mit CO₂-Pellets angereicherte Einzel-Druckluftstrom 27 trifft außermittig auf einen Abschnitt des Ringbereiches 20 und auf den Außenbereich 28 der Schutzgasdüse 15. Durch die Drehbewegung des Rotationsgetriebes 18 wird die Winkelstrahldüse 26 über den gesamten Ringbereich 20 geführt.

### Bezugszeichenliste

- 1: Kompressor
- 2: Aufbereitungsstation
- 3: Strahlanlage
- 4: Kontaktgeber
- 5: Antriebsmotor
- 1: Dosiereinheit
- 2: CO₂-Pellets
- 8: Vorratsbehälter
- 9: Dosierscheibe
- 10: Ausblasstation
- 11: Leitung
- 12: Druckluftstrom
- 13: Strahldüse
- 14: Adapter
- 15: Schutzgasdüse
- 16: Elektrode
- 17: Schweißbrenner
- 18: Rotationsgetriebe
- 19: Motor
- 20: Ringbereich
- 21: Leitung
- 22: Volumenspeicher
- 23: Rückschlagventil
- 24: Ventil
- 25: Verteiler
- 26: Winkelstrahldüse
- 27: Einzel-Druckluftstrom
- 28: Außenbereich

## Patentansprüche

1. Verfahren zum Reinigen von Schweißbrennern (17) mit Hilfe eines kalten Strahlmittelgemisches, bestehend aus festen CO₂ Partikeln und Druckluft, wobei der Druckluftstrom (12) mit Hilfe einer oder mehrerer Strahldüsen (13) einseitig gleichmäßig außermittig auf einen bestimmten Bereich des zu reinigenden Brenners gelenkt wird und dabei gleichzeitig eine Drehbewegung um die Mittelachse des Schweißbrenners beschreibt und somit der gesamte zu reinigende Bereich reinigend überstrichen wird.

2. Verfahren nach Anspruch 1, **dadurch gekennzeichnet, dass** die CO₂-Partikel CO₂-Pellets oder CO₂-Schnee darstellen.

3. Verfahren nach Anspruch 1, **gekennzeichnet dadurch, dass** der Druckluftstrom mit unterschiedlicher Intensität intervallartig auf die zu reinigenden Bereiche trifft.

4. Verfahren nach Anspruch 1 und 2, **gekennzeichnet dadurch, dass** der mit CO₂-Partikeln beladene Druckluftstrom entsprechend der Anzahl der eingesetzten Strahldüsen geteilt wird.

5. Vorrichtung zur Durchführung des Verfahrens nach Anspruch 1, **gekennzeichnet dadurch, dass** eine oder mehrere Strahldüsen (13), deren Austrittsöffnung in Form und Größe des zu reinigenden Bereiches angepasst ist, um einen bestimmten, dem Durchmesser des zu reinigenden Bereiches angepassten Winkel aus der von Getriebeachse und Schweißbrenner gebildeten Geraden abweicht und mit diesem Winkel eine Kreisbewegung um die genannte Gerade beschreibt und somit der Innenbereich des Schweißbrenners (17) gleichmäßig mit CO₂-Partikeln erfassbar ist.

6. Vorrichtung zur Durchführung des Verfahrens nach Anspruch 1, **gekennzeichnet dadurch, dass** eine oder mehrere abgewinkelte Strahldüsen (13) eine kreisförmige Bewegung um die von Getriebeachse und Schweißbrenner (17) gebildeten Geraden beschreiben und der mit CO₂-Partikeln beladene Druckluftstrahl (12) parallel zu der gebildeten Geraden so auf den Schweißbrenner trifft, dass der Innenbereich und der Außenbereich gleichzeitig erreichbar sind.

## Claims

1. Method for cleaning welding torches (17) using a cold mixture of abrasives preferably comprising CO₂ solid particles and compressed air **characterized in that** one or more jet nozzles (13) are used to target the stream of compressed air (12) in a single-sided, out-of-center and uniform way against the torch's area to be cleaned, at the same time rotating around the welding torch's center axle so that a complete cleaning coverage of the area to be cleaned is achieved.

2. Method according to claim 1 **characterized in that** the CO₂ particles comprise CO₂ pellets or CO₂ ice.

3. Method according to claim 1 **characterized in that** the stream of compressed air is targeted at intervals with fluctuating intensity onto the area to be cleaned.

4. Method according to claim 1 and 2 **characterized in that** the stream of compressed air loaded with CO₂ particles is apportioned according to the number of jet nozzles employed.

5. Device for implementing the method according to claim 1 **characterized in that** one or more jet nozzles (13), the outlet openings of which fit in - in shape and size - with the area to be cleaned, are positioned at an angle to the straight line drawn by the gearing axle and the welding torch, such angle being selected so as to fit in with the diameter of the section to be cleaned, and where the said jet nozzles are moving in a circular motion at the said angle around the said straight line which allows the CO₂ particles to uniformly cover the internal area of the welding torch (17).

6. Device for implementing the method according to claim 1 **characterized in that** one or more angled jet nozzles (13) are moving in a circular motion around the straight line drawn by the gearing axle and the welding torch (17), whereby the stream of compressed air (12) loaded with CO₂ particles is targeted in parallel direction to the said straight line towards the welding torch so that both internal and external areas can be reached at the same time.

## Revendications

1. Procédé de nettoyage de chalumeaux soudeurs (17) à l'aide d'un mélange d'agents de grenaillage à froid, constitué de particules solides de CO₂ et d'air comprimé, le courant (12) d'air comprimé étant dirigé à l'aide d'un ou de plusieurs gicleurs de grenaillage (13) unilatéralement et excentriquement de manière régulière sur une zone déterminée du chalumeau à nettoyer et décrivant en même temps un mouvement rotatif autour de l'axe médian du chalumeau soudeur soumettant ainsi la zone complète à nettoyer à l'effet nettoyant.

2. Procédé selon la revendication 1, **caractérisé par le fait que** les particules de CO₂ sont représentées par des boulettes de CO₂ ou par de la neige de CO₂.

3. Procédé selon la revendication 1, **caractérisé par le fait que** le courant d'air comprimé atteint les zones à nettoyer avec une intensité différente par intervalles.

4. Procédé selon les revendications 1 et 2, **caractérisé par le fait que** le courant d'air comprimé chargé de particules de CO₂ est partagé en fonction du nombre de gicleurs mis en oeuvre.

5. Dispositif servant à appliquer le procédé selon la revendication 1, **caractérisé par le fait qu'**un ou que plusieurs gicleurs de grenaillage (13), dont l'orifice de sortie est adapté en forme et grandeur à la zone à nettoyer, dévient de la droite formée par l'axe du mécanisme et le chalumeau soudeur autour d'un angle bien défini adapté au diamètre de la zone à nettoyer et décrivent avec cet angle un mouvement circulaire autour de la droite citée ci-dessus et la zone intérieure du chalumeau soudeur (17) peut être ainsi uniformément atteinte par les particules de CO₂.

6. Dispositif servant à appliquer le procédé selon la revendication 1, **caractérisé par le fait qu'**un ou que plusieurs gicleurs de grenaillage (13) coudés décrivent un mouvement circulaire autour des droites formées par l'axe du mécanisme et le chalumeau soudeur (17) et que le courant d'air comprimé (12) chargé de particules de CO₂ touche le chalumeau soudeur parallèlement à la droite formée, de telle manière que la zone intérieure et la zone extérieure peuvent être uniformément atteintes.
